# EUROPEAN PATENT SPECIFICATION

(11) **EP 2 759 876 B1**
(45) Date of publication and mention of the grant of the patent: **11.01.2017**
(21) Application number: 12871608.1
(22) Date of filing: 15.11.2012
(51) Int. Cl.: H01S 3/10, H04B 10/296

(54) **OPTICAL AMPLIFIER CONTROL METHOD AND DEVICE AND OPTICAL AMPLIFIER**
OPTISCHES VERSTÄRKERREGELUNGSVERFAHREN UND VORRICHTUNG SOWIE OPTISCHER VERSTÄRKER
PROCÉDÉ ET DISPOSITIF DE COMMANDE D'UN AMPLIFICATEUR OPTIQUE, ET AMPLIFICATEUR OPTIQUE

(43) Date of publication of application: 30.07.2014
(73) Proprietor: Huawei Technologies Co., Ltd., Longgang District Shenzhen, Guangdong 518129 (CN)
(72) Inventor: LIU, Wei, Shenzhen, Guangdong 518129 (CN)
(74) Representative: Maiwald Patentanwalts GmbH
(86) International application number: PCT/CN2012/084681
(87) International publication number: WO 2014/075271

(56) References cited:
- CN-A- 1 487 349
- CN-A- 1 728 607
- CN-A- 101 158 796
- CN-A- 101 599 803
- CN-A- 102 098 109
- CN-A- 102 223 182
- US-A1- 2008 130 098
- US-B1- 8 134 776

## Description

### TECHNICAL FIELD

Embodiments of the present invention relate to communications technologies, and in particular, to a control method and device for an optical amplifier and an optical amplifier.

### BACKGROUND

In a wavelength division multiplexing (wavelength division multiplexing, WDM for short) system, an optical amplifier (optical amplifier, OA for short) is used to amplify multiple low-intensity optical signals.

After the number of waves transmitted in an optical amplifier changes, a control device in the optical amplifier adjusts a drive current of a pump laser in the optical amplifier, where the adjustment process includes a fast optical power change control process and a slow optical power change control process. In the fast control process, the control device adjusts the drive current of the pump laser in the optical amplifier according to a preset control current, so as to adjust output power of the optical amplifier. Because a delay exists in the foregoing adjustment process, in a case that a wavelength is increased or decreased in the optical amplifier, output power of an original transmission wavelength instantly increases or decreases, that is, transient effect occurs. In an actual WDM system, multiple optical amplifiers are generally used in series. Superposition of transient effect negatively affects power of the original transmission wavelength, and further causes a bit error.

Currently, the following two manners are mainly used to reduce influence of the transient effect. Manner 1: Add a variable optical attenuator (variable optical attenuator, VOA for short) to the optical amplifier, quickly detect a change of optical power of an input signal by using a feed-forward method, and then reduce the transient effect by controlling the VOA. Manner 2: Add a fiber Bragg grating (fiber Bragg grating, FBG for short), a VOA, and a coupler to the optical amplifier, filter out one wavelength through the FBG, control a signal gain through the VOA, and perform coupling to an output end through the coupler, so as to form a consuming erbium particle reciprocal to the input optical power, thereby reducing the transient effect.

US 8 134 776 B1 describes technologies relating to controlling optical amplifiers. As therein described, an optical amplifier is provided. The optical amplifier includes a light amplifying medium for receiving an input optical signal and outputting an output amplified signal; a first measuring block for measuring a change in power of the input signal; a pump laser for supplying pump light to the light amplifying medium; and an electronic control for controlling the power of the pump light in response to the measured change in power of input signal to provide an output amplified signal having a substantially constant power for one or more changes in the power of the input signal.

Although transient effect can be reduced by using the foregoing existing control method for an optical amplifier, components such as a VOA, an FBG, and a coupler need to be added to an optical amplifier, thereby causing a high cost for producing the optical amplifier.

### SUMMARY

In one aspect, the present invention provides a control method for an optical amplifier, for eliminating a defect in the prior art and reducing a cost of producing an optical amplifier.

In another aspect, the present invention provides a control device for an optical amplifier, for eliminating a defect in the prior art and reducing a cost of producing an optical amplifier.

In still another aspect, the present invention provides an optical amplifier, for eliminating a defect in the prior art and reducing a cost of producing an optical amplifier.

In one aspect, the present invention provides a control method for an optical amplifier, including:
obtaining an initial control current offset according to obtained current input optical power and obtained last input optical power of an optical amplifier, and a preset maximum working current, a preset minimum working current, a preset control current coefficient, and a preset offset coefficient of the optical amplifier;
obtaining, according to the initial control current offset and preset adjustment time, a curve of a control current offset changing with time; and
obtaining, within the adjustment time, a control current offset at a current moment according to the curve of a control current offset changing with time, and using a sum of the control current offset at the current moment and a preset control current as a drive current of a pump laser in the optical amplifier.
According to the foregoing aspect and any possible implementation manner, an implementation manner is further provided, where
the obtaining an initial control current offset according to obtained current input optical power and obtained last input optical power of an optical amplifier, and a preset maximum working current, a preset minimum working current, a preset control current coefficient, and a preset offset coefficient of the optical amplifier includes:
   obtaining a normal drive current according to Iₘₐ=(I_{full}-I_{single})·Pᵢₙ+I_{single}, where Iₘₐ is the normal drive current, I_{full} is the maximum working current, I_{single} is the minimum working current, and Pᵢₙ is the current input optical power;
   obtaining a first control current offset according to I_{offset}=(I_{full}-I_{single})·(Pᵢₙ-Pₕᵢₛᵢₙ)·K_{offset}, where I_{offset} is the first control current offset, Pₕᵢₛᵢₙ is the last input optical power, and K_{offset} is the preset offset coefficient; and
   obtaining the initial control current offset according to DA_{offset}=I_{offset}·ΔDA/ΔIₘₐ, where DA_{offset} is the initial control current offset, I_{offset} is the first control current offset, and ΔDA/ΔIₘₐ is the control current coefficient.

According to the foregoing aspect and any possible implementation manner, an implementation manner is further provided, where
the obtaining, according to the initial control current offset and preset adjustment time, a curve of a control current offset changing with time includes:
drawing, according to a preset curve parameter, the curve of a control current offset changing with time by using the initial control current offset as an initial value of a vertical coordinate, 0 as a final value of the vertical coordinate, and the adjustment time as a horizontal coordinate, where the curve parameter includes a curve type, interval time, or times of intervals.

According to the foregoing aspect and any possible implementation manner, an implementation manner is further provided, where
before the obtaining an initial control current offset according to obtained current input optical power and obtained last input optical power of an optical amplifier, and a preset maximum working current, a preset minimum working current, a preset control current coefficient, and a preset offset coefficient of the optical amplifier, the method further includes:
comparing a difference between the current input optical power and the last input optical power of the optical amplifier with a preset fast control threshold; and
when the difference between the current input optical power and the last input optical power of the optical amplifier is greater than the preset fast control threshold, performing the step of obtaining an initial control current offset according to obtained current input optical power and obtained last input optical power of an optical amplifier, and a preset maximum working current, a preset minimum working current, a preset control current coefficient, and a preset offset coefficient of the optical amplifier.

In another aspect, the present invention provides a control device for an optical amplifier, including:
a first calculation module, configured to obtain an initial control current offset according to obtained current input optical power and obtained last input optical power of an optical amplifier, and a preset maximum working current, a preset minimum working current, a preset control current coefficient, and a preset offset coefficient of the optical amplifier;
a second calculation module, configured to obtain, according to the initial control current offset and preset adjustment time, a curve of a control current offset changing with time; and
a control module, configured to obtain, within the adjustment time, a control current offset at a current moment according to the curve of a control current offset changing with time, and use a sum of the control current offset at the current moment and a preset control current as a drive current of a pump laser in the optical amplifier.

According to the foregoing aspect and any possible implementation manner, an implementation manner is further provided, where
the first calculation module is specifically configured to obtain a normal drive current according to Iₘₐ=(I_{full}-I_{single})·Pᵢₙ+I_{single}, obtain a first control current offset according to I_{offset}=(I_{full}-I_{single})·(Pᵢₙ-Pₕᵢₛᵢₙ)·K_{offset}, and obtain the initial control current offset according to DA_{offset}=I_{offset}·ΔDA/ΔIₘₐ, where Iₘₐ is the normal drive current, I_{full} is the maximum working current, I_{single} is the minimum working current, Pᵢₙ is the current input optical power, I_{offset} is the first control current offset, Pₕᵢₛᵢₙ is the last input optical power, K_{offset} is the preset offset coefficient, DA_{offet} is the initial control current offset, I_{offset} is the first control current offset, and ΔDA / ΔIₘₐ is the control current coefficient.

According to the foregoing aspect and any possible implementation manner, an implementation manner is further provided, where
the second calculation module is specifically configured to draw, according to a preset curve parameter, the curve of a control current offset changing with time by using the initial control current offset as an initial value of a vertical coordinate, 0 as a final value of the vertical coordinate, and the adjustment time as a horizontal coordinate, where the curve parameter includes a curve type, interval time, or times of intervals.

According to the foregoing aspect and any possible implementation manner, an implementation manner is further provided, where
the device further includes: a comparison module, configured to compare a difference between the current input optical power and the last input optical power of the optical amplifier with a preset fast control threshold, and start the first calculation module when the difference between the current input optical power and the last input optical power of the optical amplifier is greater than the preset fast control threshold.

In still another aspect, the present invention provides an optical amplifier, including:
a pump laser, connected to a control device and an erbium-doped fiber, and configured to input a laser to the erbium-doped fiber by using a drive current determined by the control device;
the erbium-doped fiber, configured to amplify the laser provided by the pump laser;
   and
the control device, configured to obtain an initial control current offset according to obtained current input optical power and obtained last input optical power of the optical amplifier, and a preset maximum working current, a preset minimum working current, a preset control current coefficient, and a preset offset coefficient of the optical amplifier; obtain, according to the initial control current offset and preset adjustment time, a curve of a control current offset changing with time; obtain, within the adjustment time, a control current offset at a current moment according to the curve of a control current offset changing with time, and use a sum of the control current offset at the current moment and a preset control current as the drive current of the pump laser in the optical amplifier.

According to the foregoing aspect and any possible implementation manner, an implementation manner is further provided, where
the control device is specifically configured to obtain a normal drive current according to Iₘₐ=(I_{full}-I_{single})·Pᵢₙ+I_{single}, obtain a first control current offset according to I_{offset}=(I_{full}-I_{single})·(Pᵢₙ-Pₕᵢₛᵢₙ)·K_{offset} , and obtain the initial control current offset according to DA_{offset}=I_{offset}·ΔDA/ΔIₘₐ, where Iₘₐ is the normal drive current, I_{full} is the maximum working current, I_{single} is the minimum working current, Pᵢₙ is the current input optical power, I_{offset} is the first control current offset, Pₕᵢₛᵢₙ is the last input optical power, K_{offset} is the preset offset coefficient, DA_{offset} is the initial control current offset, I_{offset} is the first control current offset, and ΔDA / Δ Iₘₐ is the control current coefficient.

According to the foregoing aspect and any possible implementation manner, an implementation manner is further provided, where
the control device is specifically configured to draw, according to a preset curve parameter, the curve of a control current offset changing with time by using the initial control current offset as an initial value of a vertical coordinate, 0 as a final value of the vertical coordinate, and the adjustment time as a horizontal coordinate, where the curve parameter includes a curve type, interval time, or times of intervals.

According to the foregoing aspect and any possible implementation manner, an implementation manner is further provided, where
the control device is further configured to compare a difference between the current input optical power and the last input optical power of the optical amplifier with a preset fast control threshold; and when the difference between the current input optical power and the last input optical power of the optical amplifier is greater than the preset fast control threshold, obtain the initial control current offset according to the obtained current input optical power and the obtained last input optical power of the optical amplifier, the preset maximum working current, the preset minimum working current, the preset control current coefficient, and the preset offset coefficient of the optical amplifier.

It can be seen from the foregoing invention content that, with the control method for an optical amplifier and the control device for an optical amplifier provided in the present invention, a preset control current is not directly used as a drive current of a pump laser in the optical amplifier, but an initial control current offset is first obtained according to current input optical power, last input optical power, a maximum working current, a minimum working current, a control current coefficient, and an offset coefficient of the optical amplifier; then a curve of a control current offset changing with time is obtained according to the initial control current offset and preset adjustment time; a control current offset at a current moment is obtained within the adjustment time according to the curve of a control current offset changing with time; and a sum of the control current offset at the current moment and the preset control current is used as the drive current of the pump laser in the optical amplifier. A control current offset changing with time is obtained through calculation according to a change situation of a working status of the optical amplifier in combination with an adjustment requirement of the optical amplifier, and the control current offset is added to a drive current value of the pump laser to implement advanced adjustment of the optical amplifier, thereby avoiding hysteresis of a drive current value caused by a delay of an adjustment process and greatly reducing the occurrence of transient effect of the optical amplifier. The foregoing control operations are all perfonned by a control device included in the optical amplifier, and it is unnecessary to add any component to the optical amplifier, thereby reducing a cost for producing the optical amplifier.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a control method for an optical amplifier according to a first embodiment of the present invention;
FIG. 2 is a flowchart of a control method for an optical amplifier according to a second embodiment of the present invention;
FIG. 3 is a schematic diagram of a curve of a control current offset changing with time according to the second embodiment of the present invention;
FIG. 4 is a schematic diagram of another curve of a control current offset changing with time according to the second embodiment of the present invention;
FIG. 5 is a schematic structural diagram of a control device for an optical amplifier according to a third embodiment of the present invention; and
FIG. 6 is a schematic structural diagram of an optical amplifier according to a fourth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art according to the embodiments of the present invention without creative efforts shall fall within the protection scope of the present invention.

An existing optical amplifier includes a pump laser and a control device, where the control device controls a drive current of the pump laser. In the present invention, a control method performed by the control device is improved, so that the control device controls the pump laser by using a control method provided in the present invention.

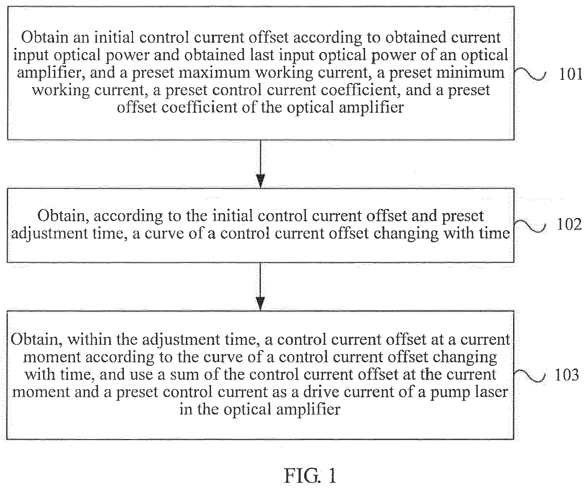

FIG. 1 is a flowchart of a control method for an optical amplifier according to a first embodiment of the present invention. As shown in FIG. 1, the method includes the following process, and the following process may be performed by a control device in the optical amplifier.

Step 101: Obtain an initial control current offset according to obtained current input optical power and obtained last input optical power of the optical amplifier, and a preset maximum working current, a preset minimum working current, a preset control current coefficient, and a preset offset coefficient of the optical amplifier.

Step 102: Obtain, according to the initial control current offset and preset adjustment time, a curve of a control current offset changing with time.

Step 103: Obtain, within the adjustment time, a control current offset at a current moment according to the curve of a control current offset changing with time, and use a sum of the control current offset at the current moment and a preset control current as a drive current of a pump laser in the optical amplifier.

In the first embodiment of the present invention, a control current offset changing with time is obtained through calculation according to a change situation of a working status of the optical amplifier in combination with an adjustment requirement of the optical amplifier, and the control current offset is added to a drive current value of a pump laser to implement advanced adjustment of the optical amplifier, thereby avoiding hysteresis of a drive current value caused by a delay of an adjustment process and greatly reducing the occurrence of transient effect of the optical amplifier. The foregoing control operations are all performed by a control device included in the optical amplifier, and it only needs to modify a program executed by the control device, but it is unnecessary to add any component to the optical amplifier, thereby reducing a cost for producing the optical amplifier.

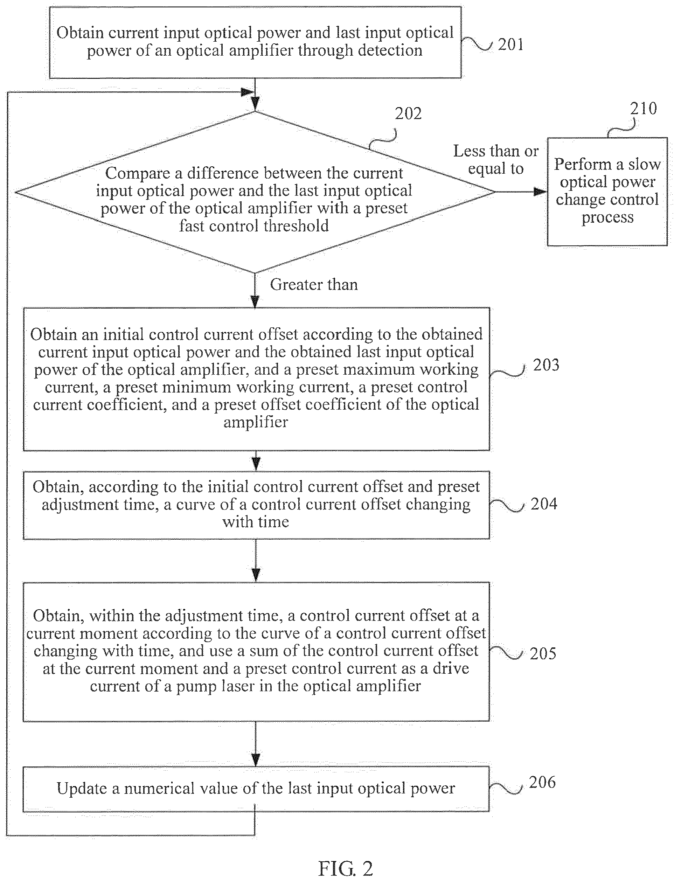

FIG. 2 is a flowchart of a control method for an optical amplifier according to a second embodiment of the present invention. As shown in FIG. 2, the method includes the following process, and the following process may be performed by a control device in the optical amplifier.

Step 201: Obtain current input optical power and last input optical power of the optical amplifier through detection.

In this step, when the optical amplifier starts, the optical amplifier runs an initial condition, and step 201 is performed for the first time to detect input optical power of the optical amplifier for the first time and obtain a first detection result, where the detection result serves as current input optical power of the first detection, and after the first detection, the input optical power obtained through the first detection is set to be last input optical power. After the first detection, the input optical power of the optical amplifier is detected at a preset detection time interval as current input optical power of each detection. For example, the optical amplifier detects the input optical power every 0.0001 seconds. Assuming that the input optical power increases linearly from a moment 0 and reaches -18.5 dBm at a 1.5^{th} second, the detection has been performed for 10000 times at a 1.0000^{th} second. For each detection, the optical amplifier performs subsequent steps according to current input optical power and last input optical power that are obtained through detection.

Step 202: Compare a difference between the current input optical power and the last input optical power of the optical amplifier with a preset fast control threshold.

When the difference between the current input optical power and the last input optical power of the optical amplifier is greater than the preset fast control threshold, perform step 203. When the difference between the current input optical power and the last input optical power of the optical amplifier is less than or equal to the preset fast control threshold, perform step 210. In this step, the fast control threshold is a preset value, and its numerical value may be flexibly set according to an actual application.

Step 210: Perform a slow optical power change control process.

In this step, the slow optical power change control process is performed. A method for performing the slow optical power change control process is not limited in the present invention, and any method for performing the slow optical power change control on the optical amplifier is applicable.

Step 203: Obtain an initial control current offset according to the obtained current input optical power and the obtained last input optical power of the optical amplifier, and a preset maximum working current, a preset minimum working current, a preset control current coefficient, and a preset offset coefficient of the optical amplifier.

In this step, the maximum working current, the minimum working current, the control current coefficient, and the offset coefficient of the optical amplifier are preset values, and may be obtained according to calibration of the optical amplifier in an implementation manner. Calibration information about the optical amplifier includes: the maximum working current and the minimum working current of the optical amplifier, and further includes a curve of correspondence between a control current and a normal drive current, that is, a DA-Iₘₐ curve, where a slope of the curve is the control current coefficient. The slope of the curve is obtained according to curve information in the calibration, and the control current coefficient is further obtained. Different current input optical power may correspond to a different control current. Preset correspondence between current input optical power and a control current is searched according to the current input optical power obtained through detection, so as to obtain a control current. The current input optical power and the last input optical power of the optical amplifier may be obtained through detection in the foregoing steps. In this step, the initial control current offset is obtained through calculation according to the current input optical power, the last input optical power, the maximum working current, the minimum working current, the control current coefficient, and the offset coefficient of the optical amplifier. In an implementation manner, the foregoing calculation method includes:
Step 1: Obtain a normal drive current according to Iₘₐ=(I_{full}-I_{single})·Pᵢₙ+I_{single}, where Iₘₐ is the normal drive current, I_{full} is the maximum working current, I_{single} is the minimum working current, and Pᵢₙ is the current input optical power.
Step 2: Obtain a first control current offset according to I_{offset}=(I_{full}-I_{single})·(Pᵢₙ-Pₕᵢₛᵢₙ)·K_{offset}, where I_{offset} is the first control current offset, Pₕᵢₛᵢₙ is the last input optical power, and K_{offset} is the preset offset coefficient. K_{offset} is a preset value, and its numerical value may be flexibly set according to an actual application. For example, the numerical value of K_{offset} may be set to 0.5. In an implementation manner, the greater a numerical value of Pᵢₙ-Pₕᵢₛᵢₙ is, the greater the numerical value of K_{offset} is.
Step 3: Obtain the initial control current offset according to DA_{offset}=I_{offset}·ΔDA/ΔIₘₐ, where DA_{offset} is the initial control current offset, I_{offset} is the first control current offset, DA is the control current, Iₘₐ is the normal drive current, and ΔDA/ΔIₘₐ is the control current coefficient, that is, ΔDA/ΔIₘₐ is the slope of the DA-Iₘₐ curve.
Step 204: Obtain, according to the initial control current offset and preset adjustment time, a curve of a control current offset changing with time.

In this step, the initial control current offset may be obtained in the foregoing step, the adjustment time is preset, and the curve of a control current offset changing with time is drawn according to the initial control current offset and the preset adjustment time in combination with a preset curve parameter. In an implementation manner, the curve of a control current offset changing with time is drawn according to the preset curve parameter by using the initial control current offset as an initial value of a vertical coordinate, 0 as a final value of the vertical coordinate, and the adjustment time as a horizontal coordinate. The curve parameter may include information such as a curve type, interval time, or times of intervals. The curve type may include a linear curve, a staircase curve, and the like.

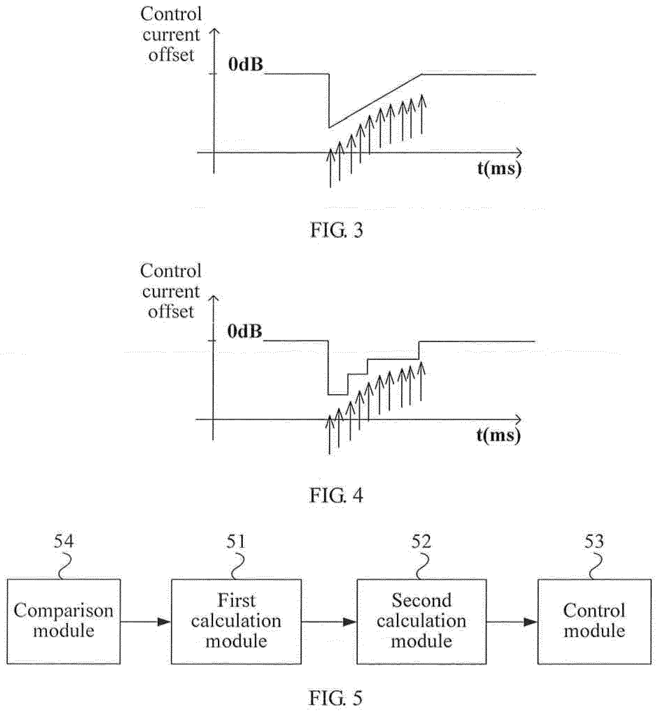

For example, FIG. 3 is a schematic diagram of a curve of a control current offset changing with time according to the second embodiment of the present invention, where the initial control current offset is 100, the preset adjustment time is 10 microseconds, and the curve parameter includes that: the curve type is a linear curve and the interval time is 1 microsecond. According to the foregoing information, the curve of a control current offset changing with time shown in FIG. 3 is drawn. In FIG. 3, a horizontal coordinate indicates time, a vertical coordinate indicates a control current offset, and the curve shown in FIG. 3 is the curve of a control current offset changing with time.

For another example, FIG. 4 is a schematic diagram of another curve of a control current offset changing with time according to the second embodiment of the present invention, where the initial control current offset is 100, the preset adjustment time is 10 microseconds, and the curve parameter include that: the curve type is a staircase curve and the times of intervals is 10. According to the foregoing information, the curve of a control current offset changing with time shown in FIG. 4 is drawn. In FIG. 4, a horizontal coordinate indicates time, a vertical coordinate indicates a control current offset, and the curve in the FIG. 4 is the curve of a control current offset changing with time.

Step 205: Obtain, within the adjustment time, a control current offset at a current moment according to the curve of a control current offset changing with time, and use a sum of the control current offset at the current moment and a preset control current as a drive current of a pump laser in the optical amplifier.

In this step, the drive current of the pump laser in the optical amplifier is adjusted within the preset adjustment time. To accurately control the time, a timer may be started, where expiration time of the timer is set to be the foregoing preset adjustment time. The adjustment is performed before the timer expires and the adjustment is ended when the timer expires. An adjustment method may be as follows: First, obtain the control current offset at the current moment according to the curve of a control current offset changing with time obtained in the foregoing step. Then, add the control current offset at the current moment to the preset control current to obtain the drive current of the pump laser. Finally, send a control signal to the pump laser, so that the pump laser uses the sum of the control current offset at the current moment and the preset control current as the drive current.

Step 206: Update a numerical value of the last input optical power.

This step is performed after step 205. That is, only when it is determined that the difference between the current input optical power and the last input optical power of the optical amplifier is greater than the preset fast control threshold in step 202, and after the drive current of the pump laser in the optical amplifier is adjusted, the numerical value of the last input optical power is updated to current input optical power for use in a next adjustment process. For example, the fast control threshold is 1 dB. When the optical amplifier starts, the first detection is performed at a 0^{th} second and input optical power is -20 dBm at this time, so that both a numerical value of current input optical power and a numerical value of last input optical power for the first time are -20 dBm. The optical amplifier detects the input optical power every 0.0001 seconds. Assuming that the optical power increases linearly from a moment 0 and reaches -18.5 dBm at a 1.5^{th} second, till detection performed at a 1.0000^{th} second, a difference between the current input optical power and the last input optical power is less than or equal to the fast control threshold, and therefore, the numerical value of the last input optical power is not updated, that is, the numerical value of the last input optical power remains -20 dBm. In detection performed at a 1.0001^{st} second, the current optical power at this time is -18.9999 dBm and the difference between the current optical power and the last input optical power -20 dBm is greater than the fast control threshold, and the drive current of the pump laser in the optical amplifier is adjusted according to the current optical power -18.9999 dBm and the last input optical power -20 dBm. After the adjustment, the numerical value of the last input optical power is updated to a numerical value of the current input optical power at the 1.0001^{st} second, that is, the numerical value of the last input optical power is updated to -18.9999 dBm. The updated numerical value of the last input optical power is provided for use in a next adjustment process, and the obtained numerical value of the last input optical power is -18.9999 dBm when step 201 is performed in the next adjustment process.

In the second embodiment of the present invention, a control current offset changing with time is obtained through calculation according to a change situation of a working status of the optical amplifier in combination with an adjustment requirement of the optical amplifier, and the control current offset is added to a drive current value of a pump laser to implement advanced adjustment of the optical amplifier, thereby avoiding hysteresis of a drive current value caused by a delay of an adjustment process and greatly reducing the occurrence of transient effect of the optical amplifier. Furthermore, the foregoing control method is performed only when a difference between current input optical power and last input optical power is greater than a fast control threshold, and a slow optical power change control process in the prior art is still performed when the difference between the current input optical power and the last input optical power is less than or equal to the fast control threshold. The foregoing control operations are all performed by a control device included in the optical amplifier, and it only needs to modify a program executed by the control device, but it is unnecessary to add any component to the optical amplifier, thereby reducing a cost for producing the optical amplifier.

FIG. 5 is a schematic structural diagram of a control device for an optical amplifier according to a third embodiment of the present invention. The control device may be disposed in the optical amplifier. As shown in FIG. 5, the control device includes at least: a first calculation module 51, a second calculation module 52, and a control module 53; and may further include: a comparison module 54.

In a case that the control device includes the first calculation module 51, the second calculation module 52, and the control module 53:
the first calculation module 51 is configured to obtain an initial control current offset according to obtained current input optical power and obtained last input optical power of the optical amplifier, and a preset maximum working current, a preset minimum working current, a preset control current coefficient, and a preset offset coefficient of the optical amplifier;
the second calculation module 52 is configured to obtain, according to the initial control current offset and preset adjustment time, a curve of a control current offset changing with time; and
the control module 53 is configured to obtain, within the adjustment time, a control current offset at a current moment according to the curve of a control current offset changing with time, and use a sum of the control current offset at the current moment and a preset control current as a drive current of a pump laser in the optical amplifier.

Based on the foregoing technical solution, specifically, the first calculation module 51 is configured to obtain a normal drive current according to Iₘₐ=(I_{full}-I_{single})·Pᵢₙ+I_{single}, obtain a first control current offset according to I_{offset}=(I_{full}-I_{single})·(Pᵢₙ-Pₕᵢₛᵢₙ)·K_{offset}, and obtain the initial control current offset according to DA_{offset}=I_{offset}·ΔDA/ΔIₘₐ, where Iₘₐ is the normal drive current, I_{full} is the maximum working current, I_{single} is the minimum working current, Pᵢₙ is the current input optical power, I_{offset} is the first control current offset, Pₕᵢₛᵢₙ is the last input optical power, K_{offset} is the preset offset coefficient, DA_{offset} is the initial control current offset, I_{offset} is the first control current offset, DA is the control current, Iₘₐ is the normal drive current, and ΔDA/ΔIₘₐ is a slope of the control current coefficient.

Based on the foregoing technical solution, specifically, the second calculation module 52 is specifically configured to draw, according to a preset curve parameter, the curve of a control current offset changing with time by using the initial control current offset as an initial value of a vertical coordinate, 0 as a final value of the vertical coordinate, and the adjustment time as a horizontal coordinate, where the curve parameter includes a curve type, interval time, or times of intervals.

Based on the foregoing technical solution, further, the device may further include: the comparison module 54. The comparison module 54 is configured to compare a difference between the current input optical power and the last input optical power of the optical amplifier with a preset fast control threshold, and start the first calculation module 51 when the difference between the current input optical power and the last input optical power of the optical amplifier is greater than the preset fast control threshold. Therefore, the first calculation module 51, the second calculation module 52, and the control module 53 run in the foregoing manner only when the difference between the current input optical power and the last input optical power is greater than the fast control threshold.

The control device for an optical amplifier according to the third embodiment of the present invention may be configured to implement the control method for an optical amplifier described in the first embodiment or the second embodiment of the present invention. For a specific implementation process and technical effect thereof, reference may be made to the first embodiment or the second embodiment of the present invention, which are not repeated herein.

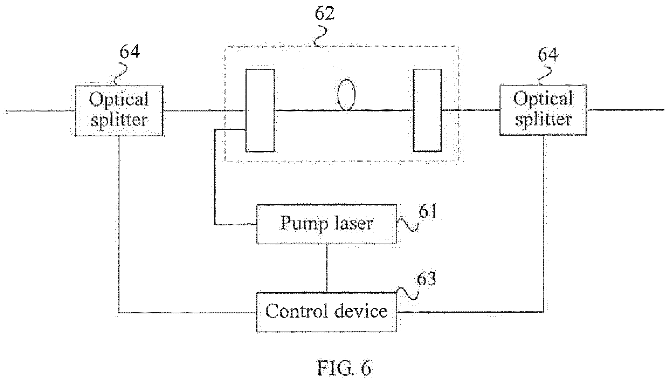

FIG. 6 is a schematic structural diagram of an optical amplifier according to a fourth embodiment of the present invention. As shown in FIG. 6, the optical amplifier includes at least: a pump laser 61, an erbium-doped fiber 62, and a control device 63. The control device 63 may receive input light and output light through an optical splitter 64.

The pump laser 61 is connected to the control device 63 and the erbium-doped fiber 62, and is configured to input a laser to the erbium-doped fiber 62 by using a drive current determined by the control device 63.

The erbium-doped fiber 62 is configured to amplify the laser provided by the pump laser 61.

The control device 63 is configured to obtain an initial control current offset according to obtained current input optical power and obtained last input optical power of the optical amplifier, and a preset maximum working current, a preset minimum working current, a preset control current coefficient, and a preset offset coefficient of the optical amplifier; obtain, according to the initial control current offset and preset adjustment time, a curve of a control current offset changing with time; obtain, within the adjustment time, a control current offset at a current moment according to the curve of a control current offset changing with time, and use a sum of the control current offset at the current moment and a preset control current as the drive current of the pump laser 61 in the optical amplifier.

Based on the foregoing technical solution, specifically, the control device 63 is specifically configured to obtain a normal drive current according to Iₘₐ=(I_{full}-I_{single})·Pᵢₙ+I_{single}, obtain a first control current offset according to I_{offset}=(I_{full}-I_{single})·(Pᵢₙ-Pₕᵢₛᵢₙ)·K_{offset}, and obtain the initial control current offset according to DA_{offset}=I_{offset}·ΔDA/ΔIₘₐ, where Iₘₐ is the normal drive current, I_{full} is the maximum working current, I_{single} is the minimum working current, Pᵢₙ is the current input optical power, I_{offset} is the first control current offset, Pₕᵢₛᵢₙ is the last input optical power, K_{offset} is the preset offset coefficient, DA_{offset} is the initial control current offset, I_{offset} is the first control current offset, DA is the control current, Iₘₐ is the normal drive current, and ΔDA/ΔIₘₐ is a slope of the control current coefficient.

Based on the foregoing technical solution, specifically, the control device 63 is specifically configured to draw, according to a preset curve parameter, the curve of a control current offset changing with time by using the initial control current offset as an initial value of a vertical coordinate, 0 as a final value of the vertical coordinate, and the adjustment time as a horizontal coordinate, where the curve parameter includes a curve type, interval time, or times of intervals.

Based on the foregoing technical solution, specifically, the control device 63 is further configured to compare a difference between the current input optical power and the last input optical power of the optical amplifier with a preset fast control threshold; and when the difference between the current input optical power and the last input optical power of the optical amplifier is greater than the preset fast control threshold, obtain the initial control current offset according to the obtained current input optical power and the obtained last input optical power of the optical amplifier, and the preset maximum working current, the preset minimum working current, the preset control current coefficient, and the preset offset coefficient of the optical amplifier.

The control device for an optical amplifier described in the third embodiment of the present invention may be disposed in the optical amplifier described in the fourth embodiment of the present invention, and uses the control method for an optical amplifier described in the first embodiment or the second embodiment of the present invention to control the optical amplifier described in the fourth embodiment of the present invention. For a specific implementation process and technical effect thereof, reference may be made to the first embodiment or the second embodiment of the present invention, which are not repeated herein.

It should be noted that, for brevity, the foregoing method embodiments are described as a series of actions. However, persons skilled in the art should know that the present invention is not limited to the order of the described actions, because according to the present invention, some steps may adopt other order or occur simultaneously. Next, it should be further known by persons skilled in the art that the described embodiments all belong to exemplary embodiments, and the involved actions and modules are not necessarily required in the present invention.

In the foregoing embodiments, the description of each of the embodiments has its own focuses. For a part that is not described in detail in a certain embodiment, reference may be made to related descriptions in other embodiments.

Persons of ordinary skill in the art may understand that all or a part of the steps of the foregoing method embodiments may be implemented by a program instructing relevant hardware. The foregoing program may be stored in a computer readable storage medium. When the program runs, the steps included in the foregoing method embodiments are performed. The foregoing storage medium includes any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof; however, these modifications or replacements do not make the essence of corresponding technical solutions depart from the scope of the technical solutions in the embodiments of the present invention.

## Claims

1. A control method for an optical amplifier, comprising:
comparing a difference between a detected current input optical power and a detected last input optical power of the optical amplifier with a preset fast control threshold; and when the difference between the detected current input optical power and the detected last input optical power of the optical amplifier is greater than the preset fast control threshold, performing the step of:
calculating (101), an initial control current offset according to the detected current input optical power the detected last input optical power of the optical amplifier, and a preset maximum working current, a preset minimum working current, a preset control current coefficient, and a preset offset coefficient of the optical amplifier, wherein, the preset maximum working current, the preset minimum working current, the preset control current coefficient, and the preset offset coefficient are preset values and are obtained according to a calibration of the optical amplifier in an implementation manner;
obtaining (102), according to the initial control current offset and a preset adjustment time, a curve of a control current offset changing with time; and
obtaining (103), within the preset adjustment time, a control current offset at a current moment according to the curve of a control current offset changing with time, and using a sum of the control current offset at the current moment and a preset control current as a drive current of a pump laser in the optical amplifier **characterized in that**
the obtaining, according to the initial control current offset and a preset adjustment time, a curve of a control current offset changing with time comprises:
drawing, according to a preset curve parameter, the curve of a control current offset changing with time by using the initial control current offset as an initial value of a vertical coordinate, 0 as a final value of the vertical coordinate when time equals the preset adjustment time as a horizontal coordinate, wherein the curve parameter comprises a curve type, interval time, or times of intervals.

2. A control device for an optical amplifier, comprising:
a first calculation module (51), configured to calculate an initial control current offset according to a detected current input optical power, a detected last input optical power of an optical amplifier, and
a preset maximum working current, a preset minimum working current, a preset control current coefficient, and a preset offset coefficient of the optical amplifier, wherein, the preset maximum working current, the preset minimum working current, the preset control current coefficient, and the preset offset coefficient are preset values and are obtainable according to a calibration of the optical amplifier in an implementation manner;
a second calculation module (52), configured to obtain, according to the initial control current offset and a preset adjustment time, a curve of a control current offset changing with time;
and
a control module (53), configured to obtain, within the preset adjustment time, a control current offset at a current moment according to the curve of a control current offset changing with time, and use a sum of the control current offset at the current moment and a preset control current as a drive current of a pump laser in the optical amplifier, **characterized by**
the second calculation module is specifically configured to draw, according to a preset curve parameter, the curve of a control current offset changing with time by using the initial control current offset as an initial value of a vertical coordinate, 0 as a final value of the vertical coordinate when time equals the preset adjustment time as a horizontal coordinate, wherein the curve parameters comprises a curve type, interval time, or times of intervals, wherein the device further comprises:
a comparison module (54), configured to compare a difference between the detected current input optical power and the detected last input optical power of the optical amplifier with a preset fast control threshold, and start the first calculation module when the difference between the detected current input optical power and the detected last input optical power of the optical amplifier is greater than the preset fast control threshold.

3. An optical amplifier, comprising:
a pump laser (61), connected to a control device and an erbium-doped fiber, and configured to input a laser to the erbium-doped fiber by using a drive current determined by the control device;
the erbium-doped fiber (62), configured to amplify the laser provided by the pump laser;
and
the control device (63), according to claim 2.

## Patentansprüche

1. Steuerungsverfahren für einen optischen Verstärker, das Folgendes umfasst:
Vergleichen einer Differenz zwischen einer detektierten aktuellen optischen Eingangsleistung und einer detektierten letzten optischen Eingangsleistung des optischen Verstärkers mit einem voreingestellten festen Steuerungsschwellenwert;
und wenn die Differenz zwischen der detektierten aktuellen optischen Eingangsleistung und der detektierten letzten optischen Eingangsleistung des optischen Verstärkers größer als der voreingestellte feste Steuerungsschwellenwert ist, Ausführen der folgenden Schritte zum:
Berechnen (101) eines anfänglichen Steuerstromversatzes gemäß der detektierten aktuellen optischen Eingangsleistung, der detektierten letzten optischen Eingangsleistung des optischen Verstärkers und einem voreingestellten maximalen Arbeitsstrom, einem voreingestellten minimalen Arbeitsstrom, einem voreingestellten Steuerstromkoeffizienten und einem voreingestellten Versatzkoeffizienten des optischen Verstärkers, wobei der voreingestellte maximale Arbeitsstrom, der voreingestellte minimale Arbeitsstrom, der voreingestellte Steuerstromkoeffizient und der voreingestellte Versatzkoeffizient voreingestellte Werte sind und gemäß einer Kalibrierung des optischen Verstärkers in Art einer Implementierung erhalten werden;
Erhalten (102) gemäß dem anfänglichen Steuerstromversatz und einer voreingestellten Anpassungszeit einer Kurve einer zeitlichen Änderung des Steuerstromversatzes; und
Erhalten (103) innerhalb der voreingestellten Anpassungszeit eines Steuerstromversatzes zu einem aktuellen Zeitpunkt gemäß der Kurve einer zeitlichen Änderung des Steuerstromversatzes und Verwenden einer Summe des Steuerstromversatzes zu dem aktuellen Zeitpunkt und eines voreingestellten Steuerstroms als einen Ansteuerungsstrom eines Pumplasers in dem optischen Verstärker, **dadurch gekennzeichnet, dass**
das Erhalten gemäß dem anfänglichen Steuerstromversatz und einer voreingestellten Anpassungszeit einer Kurve einer zeitlichen Änderung des Steuerstromversatzes Folgendes umfasst:
Zeichnen gemäß einem voreingestellten Kurvenparameter der Kurve einer zeitlichen Änderung des Steuerstromversatzes durch Verwenden des anfänglichen Steuerstromversatzes als einen Anfangswert einer vertikalen Koordinate, von 0 als einen Endwert der vertikalen Koordinate, wenn die Zeit gleich der voreingestellten Anpassungszeit als eine horizontale Koordinate ist, wobei der Kurvenparameter einen Kurventyp, eine Intervallzeit oder Zeiten von Intervallen umfasst.

2. Steuervorrichtung für einen optischen Verstärker, die Folgendes umfasst:
ein erstes Berechnungsmodul (51), das konfiguriert ist, einen anfänglichen Steuerstromversatz gemäß einer detektierten aktuellen optischen Eingangsleistung, einer detektierten letzten optischen Eingangsleistung eines optischen Verstärkers und einem voreingestellten maximalen Arbeitsstrom, einem voreingestellten minimalen Arbeitsstrom, einem voreingestellten Steuerstromkoeffizienten und einem voreingestellten Versatzkoeffizienten des optischen Verstärkers zu berechnen, wobei der voreingestellte maximale Arbeitsstrom, der voreingestellte minimale Arbeitsstrom, der voreingestellte Steuerstromkoeffizient und der voreingestellte Versatzkoeffizient voreingestellte Werte sind und gemäß einer Kalibrierung des optischen Verstärkers in Art einer Implementierung erhalten werden können;
ein zweites Berechnungsmodul (52), das konfiguriert ist, gemäß dem anfänglichen Steuerstromversatz und einer voreingestellten Anpassungszeit eine Kurve einer zeitlichen Änderung des Steuerstromversatzes zu berechnen; und
ein Steuermodul (53), das konfiguriert ist, innerhalb der voreingestellten Anpassungszeit einen Steuerstromversatz zu einem aktuellen Zeitpunkt gemäß der Kurve einer zeitlichen Änderung des Steuerstromversatzes zu erhalten und eine Summe des Steuerstromversatzes zu dem aktuellen Zeitpunkt und eines voreingestellten Steuerstroms als einen Ansteuerungsstrom eines Pumplasers in dem optischen Verstärker zu verwenden, **dadurch gekennzeichnet, dass** das zweite Berechnungsmodul insbesondere konfiguriert ist, gemäß einem voreingestellten Kurvenparameter die Kurve einer zeitlichen Änderung des Steuerstromversatzes zu zeichnen durch Verwenden des anfänglichen Steuerstromversatzes als einen Anfangswert einer vertikalen Koordinate, von 0 als einen Endwert der vertikalen Koordinate, wenn die Zeit gleich der voreingestellten Anpassungszeit als eine horizontale Koordinate ist, wobei der Kurvenparameter einen Kurventyp, eine Intervallzeit oder Zeiten von Intervallen umfasst, wobei die Vorrichtung ferner Folgendes umfasst:
ein Vergleichsmodul (54), das konfiguriert ist, eine Differenz zwischen der detektierten aktuellen optischen Eingangsleistung und der detektierten letzten optischen Eingangsleistung des optischen Verstärkers mit einem voreingestellten festen Steuerschwellenwert zu vergleichen und das erste Berechnungsmodul zu starten, wenn die Differenz zwischen der detektierten aktuellen optischen Eingangsleistung und der detektierten letzten optischen Eingangsleistung des optischen Verstärkers größer als der voreingestellte feste Steuerschwellenwert ist.

3. Optischer Verstärker, der Folgendes umfasst:
einen Pumplaser (61), der mit einer Steuervorrichtung und einer Erbium-dotierten Faser verbunden ist und konfiguriert ist, einen Laser in die Erbium-dotierte Faser einzugeben durch Verwenden eines Ansteuerungsstroms, der durch die Steuervorrichtung bestimmt wird;
die Erbium-dotierte Faser (62), die konfiguriert ist, den Laser, der durch den Pumplaser bereitgestellt ist, zu verstärken; und
die Steuervorrichtung (63) nach Anspruch 2.

## Revendications

1. Procédé de commande pour un amplificateur optique, comprenant :
la comparaison d'une différence entre une puissance optique d'entrée détectée courante et une dernière puissance optique d'entrée détectée de l'amplificateur optique avec un seuil de commande rapide préréglé ; et, lorsque cette différence entre la puissance optique d'entrée détectée courante et la dernière puissance optique d'entrée détectée de l'amplificateur optique est plus grande que le seuil de commande rapide préréglé, l'exécution de l'étape consistant à :
calculer (101) un décalage de courant de commande initial selon la puissance optique d'entrée détectée courante, la dernière puissance optique d'entrée détectée de l'amplificateur optique, et un courant de travail maximum préréglé, un courant de travail minimum préréglé, un coefficient de courant de commande préréglé, et un coefficient de décalage préréglé de l'amplificateur optique, le courant de travail maximum préréglé, le courant de travail minimum préréglé, le coefficient de courant de commande préréglé, et le coefficient de décalage préréglé étant des valeurs préréglées et étant obtenus selon un étalonnage de l'amplificateur optique dans une manière de mise en oeuvre ;
obtenir (102), selon le décalage de courant de commande initial et un temps de réglage préréglé, une courbe d'un décalage de courant de commande changeant avec le temps ; et à
obtenir (103), dans les limites du temps de réglage préréglé, un décalage de courant de commande à un moment courant selon la courbe d'un décalage de courant de commande changeant avec le temps, et à utiliser une somme du décalage de courant de commande au moment courant et d'un courant de commande préréglé comme un courant d'attaque d'un laser à pompe dans l'amplificateur optique, **caractérisé en ce que**
l'obtention, selon le décalage de courant de commande initial et le temps de réglage préréglé, d'une courbe d'un décalage de courant de commande changeant avec le temps comprend :
le traçage, selon un paramètre de courbe préréglé, de la courbe d'un décalage de courant de commande changeant avec le temps en utilisant le décalage de courant de commande initial comme une valeur initiale d'une coordonnée verticale, 0 comme une valeur finale de cette coordonnée verticale lorsque le temps est égal au temps de réglage préréglé comme une coordonnée horizontale, ce paramètre de courbe comprenant un type de courbe, un temps d'intervalle ou des temps d'intervalles.

2. Dispositif de commande pour un amplificateur optique, comprenant :
un premier module de calcul (51), configuré de façon à calculer un décalage de courant de commande initial selon une puissance optique d'entrée détectée courante,
une dernière puissance optique d'entrée détectée d'un amplificateur optique, et un courant de travail maximum préréglé, un courant de travail minimum préréglé, un coefficient de courant de commande préréglé, et un coefficient de décalage préréglé de l'amplificateur optique, le courant de travail maximum préréglé, le courant de travail minimum préréglé, le coefficient de courant de commande préréglé, et le coefficient de décalage préréglé étant des valeurs préréglées et pouvant être obtenus selon un étalonnage de l'amplificateur optique dans une manière de mise en oeuvre ;
un deuxième module de calcul (52), configuré de façon à obtenir, selon le décalage de courant de commande initial et un temps de réglage préréglé, une courbe d'un décalage de courant de commande changeant avec le temps ; et
un module de commande (53), configuré de façon à obtenir, dans les limites du temps de réglage préréglé, un décalage de courant de commande à un moment courant selon la courbe d'un décalage de courant de commande changeant avec le temps, et à utiliser une somme du décalage de courant de commande au moment courant et d'un courant de commande préréglé comme un courant d'attaque d'un laser à pompe dans l'amplificateur optique, **caractérisé en ce que**
le deuxième module de calcul est configuré spécifiquement de façon à tracer, selon un paramètre de courbe préréglé, la courbe d'un décalage de courant de commande changeant avec le temps en utilisant le décalage de courant de commande initial comme une valeur initiale d'une coordonnée verticale, 0 comme une valeur finale de cette coordonnée verticale lorsque le temps est égal au temps de réglage préréglé comme une coordonnée horizontale, dans lequel les paramètres de courbe comprennent un type de courbe, un temps d'intervalle ou des temps d'intervalles, le dispositif comprenant en outre :
un module de comparaison (54) configuré de façon à comparer une différence entre la puissance optique d'entrée détectée courante et la dernière puissance optique d'entrée détectée de l'amplificateur optique avec un seuil de commande rapide préréglé, et à démarrer le premier module de calcul lorsque la différence entre la puissance optique d'entrée détectée courante et la dernière puissance optique d'entrée détectée de l'amplificateur optique est plus grande que le seuil de commande rapide préréglé.

3. Amplificateur optique comprenant :
un laser à pompe (61) connecté à un dispositif de commande et à une fibre dopée à l'erbium, et configuré de façon à faire entrer un laser dans la fibre dopée à l'erbium en utilisant un courant d'attaque déterminé par le dispositif de commande ;
la fibre dopée à l'erbium (62), configurée de façon à amplifier le laser fourni par le laser à pompe ; et
le dispositif de commande (63) selon la revendication 2.
